# EUROPÄISCHE PATENTSCHRIFT

(11) **EP 1 682 786 B1**
(45) Veröffentlichungstag und Bekanntmachung des Hinweises auf die Patenterteilung: **10.08.2011**
(21) Anmeldenummer: 04789567.7
(22) Anmeldetag: 29.10.2004
(51) Int. Cl.: F16D 23/12, F16D 27/00, H02K 23/04, H02K 21/16, H02K 7/116, H02K 7/106

(54) **AKTUATOR MIT EINEM ELEKTRISCHEN STELLMOTOR UND STEUERBARE REIBUNGSKUPPLUNG MIT EINEM SOLCHEN**
ACTUATOR WITH AN ELECTRIC POSITIONING MOTOR AND CONTROLLABLE FRICTION CLUTCH PROVIDED WITH SAID ACTUATOR
ACTIONNEUR POURVU D'UN MOTEUR DE POSITIONNEMENT ET EMBRAYAGE À FRICTION RÉGLABLE POURVU D'UN TEL ACTIONNEUR

(30) Priorität: 31.10.2003 AT 7532003 U
(43) Veröffentlichungstag der Anmeldung: 26.07.2006
(73) Patentinhaber: Magna Steyr Fahrzeugtechnik AG & Co KG, 8041 Graz (AT)
(72) Erfinder: REISINGER, Karl, A-8042 Graz (AT)
(74) Vertreter: Schupp, Bernhard
(86) Internationale Anmeldenummer: PCT/AT2004/000378
(87) Internationale Veröffentlichungsnummer: WO 2005/043715

(56) Entgegenhaltungen:
- DE-A1- 10 210 198
- DE-A1- 19 946 938
- US-A- 5 204 569
- US-B1- 6 571 928
- PATENT ABSTRACTS OF JAPAN Bd. 2002, Nr. 06, 4. Juni 2002 (2002-06-04) -& JP 2002 054706 A (ASMO CO LTD), 20. Februar 2002 (2002-02-20)
- PATENT ABSTRACTS OF JAPAN Bd. 012, Nr. 322 (E-652), 31. August 1988 (1988-08-31) -& JP 63 087161 A (MITSUBISHI ELECTRIC CORP), 18. April 1988 (1988-04-18)

## Beschreibung

Die Erfindung betrifft einen Aktuator bestehend aus einem elektrischen Stellmotor, einem Übertragungsmechanismus und einem Stellglied, wobei das Stellglied durch Ansteuerung des Stellmotors in eine bestimmte Stellung bringbar und in dieser auch haltbar und der Stellmotor ein Gleichstrommotor ist, der aus einem ersten Teil mit einer Anzahl am Umfang verteilter Permanentmagneten und aus einem zweiten Teil besteht, der Polzähne mit Wicklungen aufweist, die mit kommutiertem Strom gespeist werden, und wobei einer der beiden Teile bezüglich des anderen drehbar ist.

Aktuatoren werden für die Automatisierung der verschiedensten Anlagen und Vorrichtungen verwendet, insbesondere auch für die Schaltung von Getrieben, für die Betätigung steuerbarer Kupplungen, etwa in Kraftfahrzeugen, und in diesen auch für Fensterheber, Sitzverstellungen oder dergleichen. Bei allen diesen Anwendungen ist auch bei vollzogener Schaltung beziehungsweise Einstellung die geschaltete Position/Einstellung zu halten.

Dazu gibt es prinzipiell drei Möglichkeiten: Primo: Der Übertragungsmechanismus ist selbsthemmend, etwa ein hoch übersetztes Schneckengetriebe.

Das aber verschlechtert den Wirkungsgrad erheblich und erfordert einen leistungsstärkeren, größeren, Motor. Sekundo: Der Motor bleibt auch in der jeweiligen Stellung unter Strom, einem Haltestrom. Der ist zwar kleiner, führt über längere Zeit aber zu erhöhter thermischer Belastung des Motors und braucht Energie. Ausserdem muss er sehr genau eingestellt sein. Tertio: Eine zusätzliche Bremse, die den Bauaufwand beträchtlich erhöht und eigens angesteuert werden muss. Alle drei Möglichkeiten sind unbefriedigend, unabhängig davon, von welcher Art oder der Bauweise der Stellmotor ist.

So werden als Stellmotor auch Gleichstrommotoren eingesetzt, die aus einem ersten Teil mit einer Anzahl am Umfang verteilter Permanentmagneten und aus einem zweiten Teil bestehen, der Polzähne mit Wicklungen aufweist, die mit kommutiertem Strom gespeist werden. Dabei ist Gleichstrommotor im weiteren Sinn zu verstehen, er kann ein konventioneller Gleichstrommotor mit Bürsten oder ein bürstenloser Gleichstrommotor ( ="brushless DC") sein. Bei letzterem erfolgt die Kommutation durch eine geeignete Speiseschaltung auf elektronischem Wege. Der erste Teil kann sowohl der Rotor als auch der Stator sein und hat zweckmäßigerweise mindestens zwei am Umfang verteilte Permanentmagneten. Der zweite Teil kann sowohl der Stator als auch der Rotor sein, wobei der Rotor innerhalb oder ausserhalb des Stators sein kann. Auch kann der erste oder zweite Teil als Scheibe ausgeführt sein, der Motor ist dann ein sogenannter Scheibenläufer. Oft aber ist der erste Teil mit den Permanentmagneten der Stator und der zweite Teil der innenliegende zylindrische Rotor. Anzumerken ist, dass es sich hier nicht um Schrittmotoren handelt, die um eine bestimmte Anzahl Schritte von definiertem Winkel weiterschalten und dazu bestromt werden müssen.

Die Veröffentlichung DE 199 46 938 A1 beschreibt einen Antrieb , insbesondere für eine Wickelvorrichtung, mit einem kommutierten Synchronmotor mit wenigstens zwei jeweils in parallelen Ebenen befindlichen Spulenkränzen auf.

Die JP 2002 054706 A zeigt einen CVT Antrieb mit einem Aktuatormotor mit 4 Polen und einem entsprechenden Rotor zur Stabilisierung des Aktuatormotors in der Stromlosposition.

Die aus dem Stand der Technik bekannten Vorrichtungen sind technisch aufwändig konzipiert.

Es ist Ziel der Erfindung, einen Aktuator vorzuschlagen, der in möglichst einfacher Weise das Halten einer angefahrenen Stellung ohne die obigen Nachteile erlaubt. Erfindungsgemäß wird das dadurch erreicht, dass der erste Teil (das ist der mit den Permanentmagneten) über seinen Umfang abwechselnd erste Zonen kleiner magnetischer Feldstärke und zweite Zonen hoher magnetischer Feldstärke aufweist, wobei der Umfangswinkel der zweiten Zonen im Wesentlichen (das heisst ungefähr) gleich dem Umfangswinkel der Polzähne des zweiten Teiles ist, und wobei weiters die Anzahl der gleichmäβig am Umfang verteilten Polzähne so gewählt ist, dass immer alle zweiten Zonen gleichzeitig von einem Polzahn passiert werden, sodass bei Durchdrehen des Motors in unbestromtem Zustand zwischen dem ersten Teil und dem zweiten Teil ein pulsierendes Drehmoment ausgeübt wird. In den Positionen, in denen dieses Drehmoment ein Minimum ist, in den sogenannten "Rastpositionen", wirkt ein Haltemoment, das den drehbaren Teil des Motors zu halten bestrebt und geeignet ist.

Durch die erfindungsgemäßen Massnahmen wird das Gegenteil von dem erreicht, was man normalerweise anstrebt, nämlich das Bremsmoment im stromlosen Zustand (=cogging torque) zu verringern. Durch die ersten Zonen zwischen den Permanentmagneten wird die Reluktanz des Motors im stromlosen Zustand winkelabhängig vergrößert. Die Reluktanz liefert dann in den Rastpositionen - deren Lage und Anzahl von der Anordnung von Permanentmagneten und Polzähnen abhängt -ohne Bestromung das Haltemoment, das durch die erfindungsgemäßen Maßnahmen besonders stark wird. Es wird so stark, dass es in Verbindung mit einem reibungsbehafteten Übertragungsmechanismus ausreicht, um angefahrene Positionen des Stellgliedes zu halten, selbst wenn das Nennmoment des Aktuators am Abtrieb des Übertragungsmechanismus anliegt. Zu betonen ist, dass der Stellmotor selbst nicht (wie ein Schrittmotor) in einer genau definierten Lage stehen bleibt, sondern in der der jeweiligen Position nächstliegenden durch das permanente Magnetfeld bestimmten Rastposition.

Der Übertragungsmechanismus kann ein nicht selbsthemmendes Getriebe sein. Die dann geringere Reibung und die Übersetzung reichen im Verbund mit der erfindungsgemäß erhöhten Reluktanz zum Halten der Position aus. Im Stellbetrieb (also bestromt) überwindet der Stellmotor mit Hilfe seiner Wicklung die von der Reluktanz ausgeübte Bremswirkung und führt die gewünschte Stellbewegung mit seiner normalen Geschwindigkeit aus.

Die erfindungsgemäßen Maßnahmen können auf verschiedene Weise umgesetzt werden: In einer ersten Ausführungsform werden die ersten Zonen kleiner magnetischer Feldstärke und die zweiten Zonen hoher magnetischer Feldstärke durch über den Umfang variable Aufmagnetisierung des (der) Permanentmagneten erzeugt (Anspruch 2). Diese besonders einfache und billige Bauweise eignet sich besonders für kleine Stellmotoren und Massenfertigung.

In einer zweiten Ausführungsform werden zumindest einige der ersten Zonen kleiner magnetischer Feldstärke durch Zwischenräume zwischen zwei benachbarten Permanentmagneten gebildet (Anspruch 3). Dabei sind die Polzähne gleichmäßig über den Umfang verteilt und in der Zahl und Anordnung der Permanentmagneten besteht eine gewisse Gestaltungsfreiheit.

In einer dritten Ausführungsform werden zumindest einige der ersten Zonen kleiner magnetischer Feldstärke durch Vergrößerung des Luftspaltes in radialer Richtung in zumindest einzelnen Permanentmagneten geschaffen, deren Umfangswinkel ein Mehrfaches des Umfangswinkels der Polzähne ist (Anspruch 4). So wird eine kleinere Anzahl an Permanentmagneten gebraucht, die dafür mehreren Polzähnen zugeordnet sind. Die Vergrößerung des Luftspaltes in radialer Richtung kann in verschiedener Weise erreicht werden, vorzugsweise durch in die Permanentmagneten eingearbeitete Nuten.

Zur Maximierung der erfindungsgemäßen Reluktanzbremsung bestreichen zumindest einige der ersten Zonen kleiner magnetischer Feldstärke ungefähr denselben Umfangswinkel wie die Zwischenräume in Umfangsrichtung zwischen den Polzähnen (Anspruch 5) und liegt dieser Umfangswinkel in dem Bereich zwischen 0,2 und 0,3 mal dem Umfangswinkel der Polzähne (Anspruch 6). Dadurch kommen die Feldlinien des durch die Permanentmagneten aufgespannten Magnetfeldes so zu liegen, dass ihre Bremswirkung besonders groß ist.

In ähnlicher Weise wirkt auch eine weitere Maßnahme zur Maximierung der Reluktanzbremsung. Sie besteht darin, dass die Dicke der Spitzen der Polzähne in radialer Richtung kleiner als der Abstand der Spitzen zweier benachbarter Polzähne ist (Anspruch 7). Die Spitzen der Polzähne sind im Querschnitt die Zwischenräume zwischen den Polzähnen in Umfangsrichtung begrenzenden Enden. Wenn diese dünn sind, werden durch das permanente Magnetfeld nur kleine Wirbelströme und Randströme induziert.

Eine besonders einfache und vom Konventionellen am wenigsten abweichende Bauweise besteht darin, dass der erste Teil der Stator und der zweite Teil der innenliegende Rotor ist (Anspruch 8). Eine besonders vorteilhafte und wartungsfreie Bauweise ist bei elektronischer Ansteuerung des Motors möglich. Mit einer solchen Ansteuerung kann die Kommutation auf elektronischem Weg bewerkstelligt werden. In dieser Bauweise ist der zweite Teil der Stator und der erste Teil der innenliegende Rotor. Das ist ohne Mehraufwand an Hardware möglich, wenn eine elektronische Ansteuerung sowieso vorhanden ist.

Die Erfindung betrifft auch eine steuerbare Reibungskupplung mit einem Aktuator nach einem der Ansprüche 1 bis 9 (Anspruch 10). Bei Reibungskupplungen sind die eingangs erwähnten Nachteile der bekannten Aktuatoren gravierend und das der Erfindung zugrundeliegende Problem ist besonders groß. Bei Mehrscheibenkupplungen im Antriebsstrang eines Kraftfahrzeuges ist obendrein in bestimmten Fahrsituationen (Bremsen mit ABS) ein sehr schnelles Ansprechen geboten. Es hat sich gezeigt, dass der erfindungsgemäße Aktuator die Kupplung durch sein schnelles Ansprechen bei entsprechender Bestromung schnell öffnet und trotzdem auch tatsächlich gegen die Wirkung der Kupplungsfeder(n) hält.

In einer besonders vorteilhaften Ausführungsform einer solchen Kupplung ist der Übertragungsmechanismus ein Zahnradgetriebe und das Stellglied besteht aus zwei relativ zueinander verdrehbaren Rampenringen, wobei je nach Anordnung zumindest einer verdrehbar ist (Anspruch 11). Ein solches Stellglied ist besonders reibungsarm und feinfühlig und der Aktuator kann dank der erfindungsgemäßen Gestaltung sehr schnell und mit geringer Trägheit reagieren.

Im folgenden wird die Erfindung anhand von Abbildungen beschrieben und erläutert. Es stellen dar:
- Fig. 1:: Schema einer Kupplung mit einem Erfindungsgegenstand,
- Fig. 2:: Querschnitt nach AB in Fig. 1 eines erfindungsgemäßen Stell- motors in einer ersten Ausführungsform,
- Fig. 3:: wie Fig. 2 in einer zweiten Ausführungsform,
- Fig. 4:: wie Fig. 2 in einer dritten Ausführungsform,
- Fig. 5:: wie Fig. 2 in einer vierten Ausführungsform.

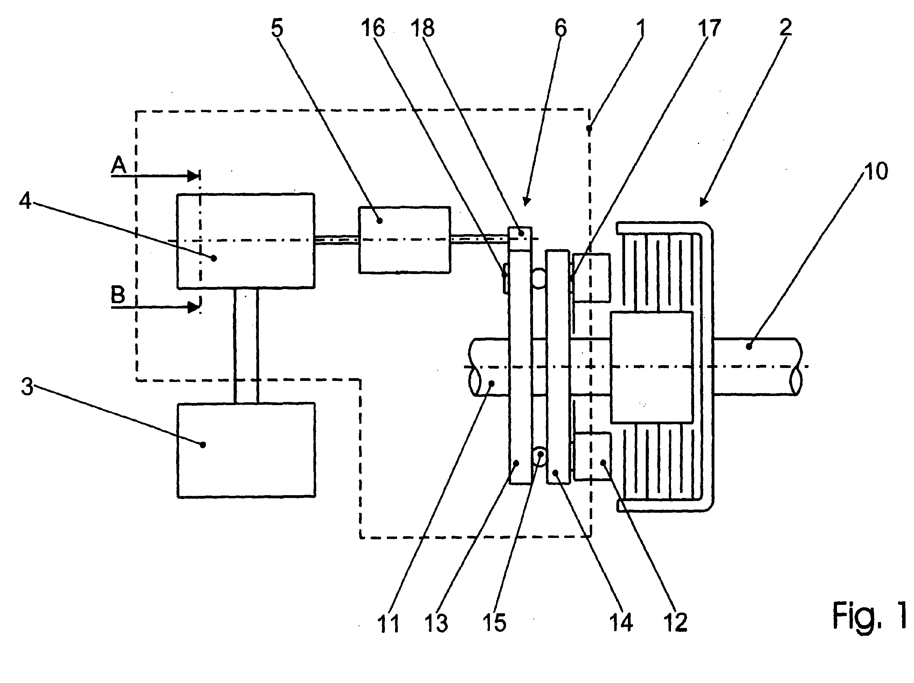

In **Fig. 1** ist der Aktuator summarisch mit 1 und die Kupplung mit 2 bezeichnet. Der Aktuator setzt sich aus einem von einem Steuergerät 3 angesteuerten Stellmotor 4, einem Übertragungsmechanismus 5 und einem Stellglied 6 zusammen, mittels welchem an der Kupplung 2 eine bestimmte Anpresskraft beziehungsweise ein bestimmtes zu übertragendes Drehmoment eingestellt wird. Das von der Kupplung 2 zu übertragende Drehmoment wird vom Steuergerät 3 aus fahrdynamischen oder anderen Größen ermittelt, und über die Stromzufuhr zum Stellmotor 4 entsprechend eingestellt.

Die Kupplung 2 selbst, eine Lamellen- oder Mehrscheibenkupplung, ist nur schematisch dargestellt, weil von der üblichen Bauweise. Sie besteht aus einem Primärteil 10 mit Primärwelle und Primärlamellen und aus einem Sekundärteil 11 mit einem Sekundärteil und Sekundärlamellen. Die Lamellen beider Teile 10,11 sind mittels einer Andruckplatte 12 zusammenpressbar, auf die ein Stellglied 6 wirkt. Das Stellglied 6 besteht aus einem ersten Rampenring 13 und einem zweiten Rampenring 14 mit dazwischen liegenden Kugeln 15. Mit 16,17 sind Drucklager angedeutet, die die Rampenringe gegenüber nicht oder mit anderer Drehzahl umlaufenden Teilen abstützen.

Derartige Stellglieder sind ebenfalls an sich bekannt und allgemein üblich. Einer der beiden Rampenringe, hier der Ring 13, wird von einem Ritzel 18 in Drehung versetzt, welches den Abtrieb des Getriebes 5 bildet. Das Getriebe 5 ist ein Untersetzungsgetriebe, beispielsweise ein Stirnradgetriebe oder ein Wellengetriebe ("Harmonic drive") oder ein Schneckengetriebe, welches dank der Erfindung nicht selbsthemmend zu sein braucht. Im Rahmen der Erfindung sind auch andere Übertragungsmechanismen und andere Stellglieder einsetzbar, die Erfindung ist nicht auf das gezeigte Ausführungsbeispiel beschränkt. So könnten etwa beide Rampenringe 13,14 über einen Verdrehnocken und Scherenhebel (beides nicht dargestellt) betätigt werden. Überhaupt können anstelle der Rampenringe auch andere Mechanismen verwendet werden.

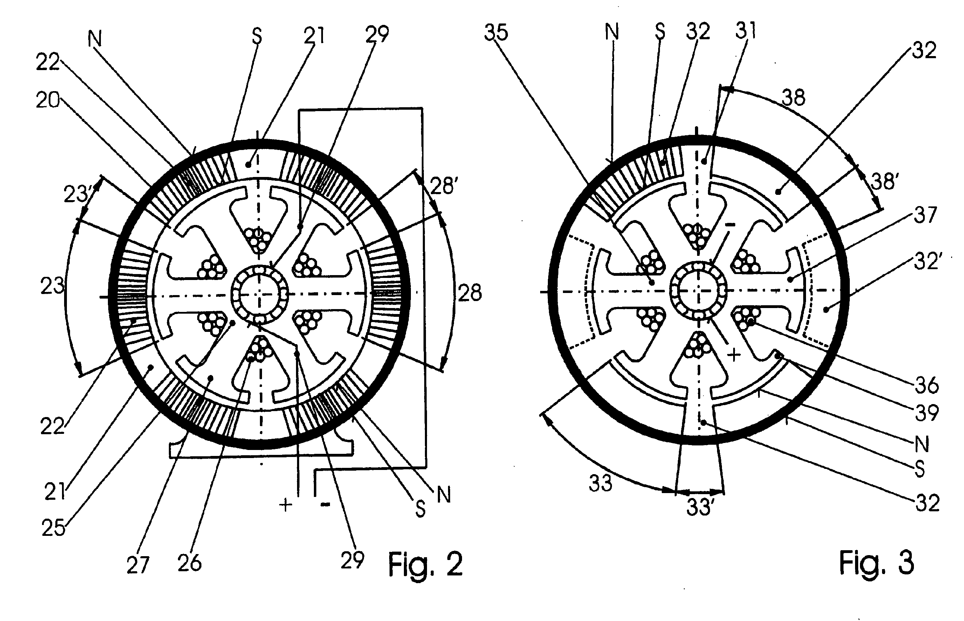

**Fig. 2** zeigt eine erste Ausführungsform des Stellmotors 4 im Detail. Er besteht aus einem Stator 20 und einem Rotor 25. Der Stator 20 ist hier als Permanentmagnet in Form eines rundum geschlossenen Hohlzylinders ausgebildet, auf dem erste Zonen kleiner magnetischer Feldstärke 21 sich mit zweiten Zonen großer magnetischer Feldstärke 22 abwechseln. Deren Polung ist mit den Buchstaben N und S in der Zeichnung angegeben. Die ersten Zonen 21 des Stators 20 bestreichen jeweils einen Umfangswinkel 23, die dazwischenliegenden zweiten Zonen einen Umfangswinkel 23'. Der Rotor 25 besitzt hier sechs Polzähne 27 mit Wicklung 26. Die Form der Polzähne 27 ist anhand der Fig. 3 näher beschrieben. Der Umfangswinkel der Polzähne 27 ist mit 28 bezeichnet, der der Zwischenräume zwischen den Polzähnen mit 28'. Da es sich um einen Gleichstrommotor handelt, erfolgt die Stromzufuhr zum Rotor 25 über einen Kommutator 29.

Die Ausführungsform der **Fig. 3** unterscheidet sich von der vorhergehenden nur in der Ausbildung des Stators, der Rest ist wie anhand der Fig. 2 beschrieben. Der Stator 30 ist hier mit zwei Paaren von Permanentmagneten 32 bestückt; deren Polung eingezeichnet ist. Es könnte aber noch ein weiteres Paar 32', strichliert, vorgesehen sein. Zwischen den Permanentmagneten 31 sind Zwischenräume 31. Der Umfangswinkel der Permanentmagneten 32 ist mit 33 bezeichnet, der Umfangswinkel der Zwischenräume 31 mit 33'. Der Rotor 35 mit Wicklung 36 und Polzähnen 37 ist wie in Fig. 2. Der Umfangswinkel der Polzähne 37 ist mit 38 bezeichnet und der der Zwischenräume 31 mit 38'. Die Spitzen 39 der Polzähne, das sind die an die Zwischenräume zwischen den Polen anschließenden Enden, sind in radialer Richtung möglichst dünn.

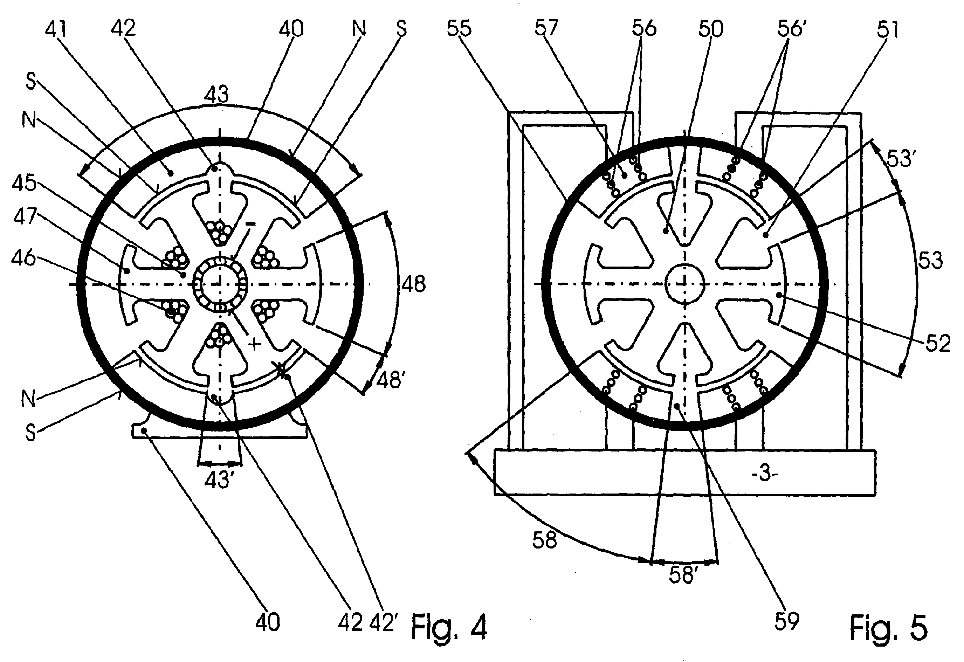

Die Ausführungsform der **Fig. 4** unterscheidet sich von der der Fig. 3 nur dadurch, dass anstelle von zwei Permanentmagneten 31 mit Zwischenraum 32 ein einziger Permanentmagnet 40 mit einer Nut 42 vorgesehen ist. Diese Nuten 42 sind eine Möglichkeit, eine Zone vergrößerter Spaltweite zu schaffen. Unter Spalt ist hier der mit 42' bezeichnete Luftspalt zu verstehen, der, von einem Polzahn des sich drehenden Rotors aus betrachtet, bei Passieren der Nuten 42 größer wird. Alles andere ist gleich, die Bezugszeichen sind die der Fig. 3, um 10 erhöht.

In der Ausführungsform der **Fig.5** sind die Verhältnisse umgekehrt. Hier ist es nicht der Stator, sondern der Rotor 50, der den ersten Teil des Motors mit dem bzw. den Permanentmagneten bildet. Die ersten Zonen kleiner magnetischer Feldstärke 51 und die zweiten Zonen großer magnetischer Feldstärke 52 sind hier am Rotor 50 ausgebildet. Dazu bestehen wieder die anhand der vorhergehenden Figuren beschriebenen Möglichkeiten; eingezeichnet ist nur die der Fig. 3 entsprechende. Diese Zonen 51,52 nehmen Umfangswinkel 53, 53' ein. Hier ist es daher der Stator 55, der Wicklungen 56 aufnimmt und Polschuhe 57 (entsprechend den Polzähnen der vorhergehenden Ausführungsbeispiele) besitzt. Die Umfangswinkel der Polschuhe 57 und der Zwischenräume 59 sind mit 58 bzw. 58' bezeichnet. Dadurch, dass die Wicklungen 56 im Stator sind und daher nicht über einen "mechanischen Kommutator" gespeist werden, muss den Wicklungen 56, 56' und gegebenenfalls vorhandenen weiteren Wicklungen der Erregerstrom in bereits kommutierter Form zugeführt werden. Diese "elektronische Kommutation" erfolgt im Steuergerät 3. Dabei ist das Steuergerät 3 hier nur summarisch gemeint, es kann verschiedene Funktionen in sich vereinen.

Insgesamt wird durch die beschriebenen Anordnungen erreicht, dass der stromlose Stellmotor in der in den Fig. 2 bis Fig. 5 dargestellten Stellung stehenbleibt und dort nur durch die Wirkung der Permanentmagneten gegen eine gewisse Kraft festgehalten wird. Da bei allen gezeigten Ausführungsbeispielen des Stellmotors dreizählige Symmetrie herrscht, entsprechen der dargestellten Position genau genommen sechs verschiedene Positionen.

## Patentansprüche

1. Aktuator bestehend aus einem elektrischen Stellmotor, einem Übertragungsmechanismus und einem Stellglied, wobei das Stellglied durch Ansteuerung des Stellmotors in eine bestimmte Stellung bringbar und in dieser auch haltbar und der Stellmotor ein Gleichstrommotor ist, der besteht aus einem ersten Teil mit einer Anzahl am Umfang verteilter Permanentmagneten und aus einem zweiten Teil, der Polzähne mit Wicklungen aufweist, die mit kommutiertem Strom gespeist werden, wobei
a) der erste Teil (20;30;40;50) über seinen Umfang abwechselnd erste Zonen kleiner magnetischer Feldstärke (21;31;41;51) und zweite Zonen hoher magnetischer Feldstärke (22;32;24;52) aufweist
b) wobei die Anzahl der gleichmäßig am Umfang verteilten Polzähne (27; 37; 47;57) so gewählt ist, dass immer alle zweiten Zonen (22;32;24;52) gleichzeitig von einem Polzahn (27;37;47;57) passiert werden,
c) sodass in unbestromtem Zustand zwischen dem ersten Teil (20;30;40;50) und dem zweiten Teil (25;35;45;55) ein erhöhtes pulsierendes Drehmoment ausgeübt wird,
**dadurch gekennzeichnet, dass**
der Umfangswinkel (23;33;34;35) der zweiten Zonen (22;32;24;52) gleich dem Umfangswinkel (28;38;48;58) der Polzähne (27;37;47;57) des zweiten Teiles (25;35;45;55) ist,.

2. Aktuator nach Anspruch 1, **dadurch gekennzeichnet, dass** die ersten Zonen kleiner magnetischer Feldstärke (21) und die zweiten Zonen hoher magnetischer Feldstärke (22) durch über den Umfang variable Aufmagnetisierung des (der) Permanentmagneten (20) erzeugt werden.

3. Aktuator nach Anspruch 1, **dadurch gekennzeichnet, dass** zumindest einige der ersten Zonen kleiner magnetischer Feldstärke (31) durch Zwischenräume zwischen zwei benachbarten Permanentmagneten (32) gebildet werden.

4. Aktuator nach Anspruch 1, **dadurch gekennzeichnet, dass** zumindest einige der ersten Zonen kleiner magnetischer Feldstärke (41) durch Vergröβerung des Luftspaltes (41') in radialer Richtung in zumindest einzelnen Permanentmagneten (42) geschaffen werden, deren Umfangswinkel (43) ein Mehrfaches des Umfangswinkels (48) der Polzähne (47) ist.

5. Aktuator nach Anspruch 1, **dadurch gekennzeichnet, dass** der Umfangswinkel (23';33';43';53') zumindest einiger der ersten Zonen kleiner magnetischer Feldstärke (21;31;41;51) ungefähr gleich dem Umfangswinkel (28'; 38';48';58') der Zwischenräume in Umfangsrichtung zwischen den Polzähnen (27;37;47;57) ist.

6. Aktuator nach Anspruch 5, **dadurch gekennzeichnet, dass** dieser Umfangswinkel (23';33';43';53') in dem Bereich zwischen 0,2 und 0,3 mal dem Umfangswinkel (28;38;48;58) der Polzähne (27;37;47;57) beträgt.

7. Aktuator nach Anspruch 1, **dadurch gekennzeichnet, dass** die Dicke der Spitzen (39) der Polzähne (27;37;47) in radialer Richtung kleiner als der Abstand der Spitzen zweier benachbarter Polzähne ist.

8. Aktuator nach Anspruch 1, **dadurch gekennzeichnet, dass** der erste Teil (20;30;40) der Stator und der zweite Teil (25;35;45) der innenliegende Rotor ist.

9. Aktuator nach Anspruch 1, **dadurch gekennzeichnet, dass** der zweite Teil (55) der Stator und der erste (50) Teil der innenliegende Rotor ist.

10. Steuerbare Reibungskupplung mit einem Aktuator nach einem der Ansprüche 1 bis 9.

11. Steuerbare Reibungskupplung nach Anspruch 10, **dadurch gekennzeichnet, dass** der Übertragungsmechanismus (5) ein Zahnradgetriebe ist und das Stellglied (6) aus zwei relativ zueinander verdrehbaren Rampenringen (13,14) besteht, wovon zumindest einer über den Übertragungsmechanismus (5) verdrehbar ist.

## Claims

1. Actuator comprising an electric actuating motor, a transmission mechanism and an actuating element, it being possible for the actuating element to be brought into a specific position by the actuating motor being driven and also to be held in this position, and the actuating motor being a DC motor which comprises a first part with a number of permanent magnets distributed over the circumference and a second part which has pole teeth having windings, which are fed with commutated current,
a) the first part (20; 30; 40; 50) having alternately first zones having a low magnetic field strength (21; 31; 41; 51) and second zones having a high magnetic field strength (22; 32; 24; 52) over its circumference,
b) the number of pole teeth (27; 37; 47; 57) distributed evenly over the circumference being selected such that all of the second zones (22; 32; 24; 52) are always passed at the same time by a pole tooth (27; 37; 47; 57),
c) with the result that, in the state in which there is no current flowing, an increased pulsating torque is exerted between the first part (20; 30; 40; 50) and the second part (25; 35; 45; 55),
**characterized in that**
the circumferential angle (23; 33; 34; 35) of the second zones (22; 32; 24; 52) is equal to the circumferential angle (28; 38; 48; 58) of the pole teeth (27; 37; 47; 57) of the second part (25; 35; 45; 55).

2. Actuator according to Claim 1, **characterized in that** the first zones having a low magnetic field strength (21) and the second zones having a high magnetic field strength (22) are produced by the permanent magnet(s) (20) being magnetized variably over the circumference.

3. Actuator according to Claim 1, **characterized in that** at least some of the first zones having a low magnetic field strength (31) are formed by interspaces between two adjacent permanent magnets (32).

4. Actuator according to Claim 1, **characterized in that** at least some of the first zones having a low magnetic field strength (41) are created by the air gap (41') being enlarged in the radial direction in at least individual permanent magnets (42), whose circumferential angle (43) is a multiple of the circumferential angle (48) of the pole teeth (47).

5. Actuator according to Claim 1, **characterized in that** the circumferential angle (23'; 33'; 43'; 53') of at least some of the first zones having a low magnetic field strength (21; 31; 41; 51) is approximately equal to the circumferential angle (28'; 38'; 48', 58') of the interspaces in the circumferential direction between the pole teeth (27; 37; 47; 57).

6. Actuator according to Claim 5, **characterized in that** this circumferential angle (23'; 33'; 43'; 53') is in the range between 0.2 and 0.3 times the circumferential angle (28; 38; 48; 58) of the pole teeth (27; 37; 47; 57).

7. Actuator according to Claim 1, **characterized in that** the thickness of the tips (39) of the pole teeth (27; 37; 47) in the radial direction is smaller than the distance between the tips of two adjacent pole teeth.

8. Actuator according to Claim 1, **characterized in that** the first part (20; 30; 40) is the stator, and the second part (25; 35; 45) is the inner rotor.

9. Actuator according to Claim 1, **characterized in that** the second part (55) is the stator, and the first part (50) is the inner rotor.

10. Controllable friction clutch having an actuator according to one of Claims 1 to 9.

11. Controllable friction clutch according to Claim 10, **characterized in that** the transmission mechanism (5) is a toothed gear, and the actuating element (6) comprises two ramp rings (13, 14) which can be rotated in relation to one another, of which at least one can be rotated via the transmission mechanism (5).

## Revendications

1. Actionneur constitué d'un moteur de positionnement électrique, d'un mécanisme de transmission et d'un organe d'actionnement, l'organe d'actionnement pouvant être amené dans une position déterminée par commande du moteur de positionnement et pouvant aussi être maintenu dans cette position et le moteur de positionnement étant un moteur à courant continu, qui se compose d'une première partie avec un certain nombre d'aimants permanents répartis sur la périphérie et d'une deuxième partie qui présente des dents polaires avec des enroulements qui sont alimentés en courant commuté,
a) la première partie (20 ; 30 ; 40 ; 50) présentant sur sa périphérie une alternance de premières zones de petite intensité de champ magnétique (21 ; 31 ; 41 ; 51) et de deuxièmes zones de grande intensité de champ magnétique (22 ; 32 ; 24 ; 52),
b) le nombre des dents polaires (27 ; 37 ; 47 ; 57) réparties uniformément sur la périphérie étant choisi de telle sorte qu'à chaque fois toutes les deuxièmes zones (22 ; 32 ; 24 ; 52) soient simultanément passées par une dent polaire (27 ; 37 ; 47 ; 57),
c) de sorte que dans l'état non alimenté en courant, un couple pulsant accru soit exercé entre la première partie (20 ; 30 ; 40 ; 50) et la deuxième partie (25 ; 35 ; 45 ; 55),
**caractérisé en ce que**
l'angle périphérique (23 ; 33 ; 34 ; 35) des deuxièmes zones (22 ; 32 ; 24 ; 52) est égal à l'angle périphérique (28 ; 38 ; 48 ; 58) des dents polaires (27 ; 37 ; 47 ; 57) de la deuxième partie (25 ; 35 ; 45 ; 55).

2. Actionneur selon la revendication 1, **caractérisé en ce que** les premières zones de petite intensité de champ magnétique (21) et les deuxièmes zones de grande intensité de champ magnétique (22) sont produites par magnétisation variable sur la périphérie de (des) l'aimant(s) permanent(s) (20).

3. Actionneur selon la revendication 1, **caractérisé en ce qu'**au moins certaines des premières zones de petite intensité magnétique (31) sont formées par des espaces intermédiaires entre deux aimants permanents adjacents (32).

4. Actionneur selon la revendication 1, **caractérisé en ce qu'**au moins certaines des premières zones de petite intensité de champ magnétique (41) sont produites par augmentation de l'entrefer (41') dans la direction radiale dans des aimants permanents (42) au moins individuels, dont l'angle périphérique (43) est un multiple de l'angle périphérique (48) des dents polaires (47).

5. Actionneur selon la revendication 1, **caractérisé en ce que** l'angle périphérique (23' ; 33' ; 43' ; 53') d'au moins certaines des premières zones de petite intensité de champ magnétique (21 ; 31 ; 41 ; 51) est approximativement égal à l'angle périphérique (28' ; 38' ; 48' ; 58') des espaces intermédiaires dans la direction périphérique entre les dents polaires (27 ; 37 ; 47 ; 57).

6. Actionneur selon la revendication 5, **caractérisé en ce que** cet angle périphérique (23' ; 33' ; 43' ; 53') est compris dans la plage de 0,2 à 0,3 fois l'angle périphérique (28 ; 38 ; 48 ; 58) des dents polaires (27 ; 37 ; 47 ; 57).

7. Actionneur selon la revendication 1, **caractérisé en ce que** l'épaisseur des pointes (39) des dents polaires (27 ; 37 ; 47) dans la direction radiale est inférieure à la distance entre les pointes de deux dents polaires adjacentes.

8. Actionneur selon la revendication 1, **caractérisé en ce que** la première partie (20 ; 30 ; 40) est le stator et la deuxième partie (25 ; 35 ; 45) est le rotor interne.

9. Actionneur selon la revendication 1, **caractérisé en ce que** la deuxième partie (55) est le stator et la première partie (50) est le rotor interne.

10. Embrayage à friction commandable comprenant un actionneur selon l'une quelconque des revendications 1 à 9.

11. Embrayage à friction commandable selon la revendication 10, **caractérisé en ce que** le mécanisme de transmission (5) est un engrenage à roue dentée et l'organe d'actionnement (6) se compose de deux bagues de rampe rotatives l'une par rapport à l'autre (13, 14), dont au moins l'une peut être tournée par le biais du mécanisme de transmission (5).
